Europäisches Patentamt

European Patent Office

Office européen des brevets

(11) Veröffentlichungsnummer: **0 347 648**

**A1**

(12) **EUROPÄISCHE PATENTANMELDUNG**

(21) Anmeldenummer: **89110314.5**

(22) Anmeldetag: **07.06.89**

(51) Int. Cl.⁴: **G01T 1/29**

(30) Priorität: **21.06.88 DE 3820938**

(43) Veröffentlichungstag der Anmeldung:
**27.12.89 Patentblatt 89/52**

(84) Benannte Vertragsstaaten:
**BE DE FR GB**

(71) Anmelder: **Siemens Aktiengesellschaft**
**Wittelsbacherplatz 2**
**D-8000 München 2(DE)**

(72) Erfinder: **Finkenzeller, Johann**
**Herringstrasse 8**
**D-8520 Erlangen(DE)**
Erfinder: **Hubert, Günter**
**Wellerstädter Weg 28**
**D-8523 Baiersdorf(DE)**

(54) **Auslesevorrichtung für einen Speicherleuchtschirm.**

(57) Die Erfindung betrifft eine Auslesevorrichtung für einen Speicherleuchtschirm (4), in dem Röntgenstrahlenbilder latent gespeichert sind und der eine stimulierbare Leuchtstoffschicht (13) und eine Schicht (14) aus magnetischem Material aufweist, mit einer Abtastvorrichtung, die eine zeilenförmige Abtastung mittels eines Abtaststrahles einer Strahlenquelle bewirkt, so daß der Speicherleuchtschirm (4) bildpunktweise zum Leuchten angeregt wird, mit einer Transportvorrichtung (15) mit magnetischen Haltemitteln für den Speicherleuchtschirm (4) und mit einer Detektorvorrichtung zum flächenförmigen Erfassen des von dem Speicherleuchtschirm (4) emittierten Lichtes. Die Transportvorrichtung (15) weist wenigstens im Bereich (27) des Abtaststrahles eine magnetische Antriebswalze (15) auf, die den Transport des Speicherleuchtschirmes (4) bewirkt.

FIG 3

EP 0 347 648 A1

## Auslesevorrichtung für einen Speicherleuchtschirm

Die Erfindung betrifft eine Auslesevorrichtung für einen Speicherleuchtschirm, in dem Röntgenstrahlenbilder latent gespeichert sind und der eine stimulierbare Leuchtstoffschicht und eine Schicht aus magnetischem Material aufweist, mit einer Abtastvorrichtung, die eine zeilenförmige Abtastung mittels eines Abtaststrahles einer Strahlenquelle bewirkt, so daß der Speicherleuchtschirm bildpunktweise zum Leuchten angeregt wird, mit einer Transportvorrichtung mit magnetischen Haltemitteln für den Speicherleuchtschirm und mit einer Detektorvorrichtung zum flächenförmigen Erfassen des von dem Speicherleuchtschirm emittierten Lichtes.

In der EP-A-0 098 596 ist eine derartige Auslesevorrichtung beschrieben, bei der der Speicherleuchtschirm durch magnetische Kraft auf einem endlosen Riemen gehalten ist. Hierzu kann der Riemen derart ausgebildet sein, daß in ihm Magnete eingelassen sind, die den Speicherleuchtschirm mit seiner Schicht aus magnetischem Material auf den Riemen halten. Als zweite Ausführung ist ein Magnet vorgesehen, der unterhalb des Riemens angeordnet ist, so daß der Speicherleuchtschirm auf Grund der Kraft des Magneten auf den Riemen gepreßt wird. Eine derartige Vorrichtung weist aber eine aufwendige Herstellung auf. Auch entstehen Schwierigkeiten durch mangelhaften Gleichlauf und exakte Positionierung des Speicherleuchtschirmes, da der Riemen flexibel sein muß und somit während des Vorschubes beispielsweise Höhenschwankungen auftreten können.

Die Erfindung geht von der Aufgabe aus, eine Auslesevorrichtung der eingangs genannten Art zu schaffen, die einen einfachen Aufbau aufweist und zumindest im Bereich der Abtastung eine dreidimensionale exakte Positionierung ermöglicht.

Die Aufgabe wird erfindungsgemäß dadurch gelöst, daß die Transportvorrichtung im Bereich des Abtaststrahles eine magnetische Antriebswalze aufweist, die den Transport des Speicherleuchtschirmes bewirkt. Durch diese feste Antriebswalze wird erreicht, daß der Speicherleuchtschirm im Bereich des Abtaststrahles in der Höhe und auch seitlich definiert gehalten wird, so daß keine Verzerrungen des Bildes in Folge von Abweichungen entstehen können.

Ein einfacher und veränderlicher Aufbau der Antriebswalze wird erreicht, wenn sie eine Achse aus nichtmagnetischem Material aufweist, auf die Ringmagnete aufgesteckt sind, die beidseitig von ringförmigen Polstücken begrenzt werden, und wenn sich zwischen den Polstücken Distanzstücke aus nichtmagnetischem Material befinden. Die Antriebsachse läßt sich leichter herstellen, wenn die Polstücke einen größeren Durchmesser aufweisen als die Ringmagnete. Die Reibungskraft und damit der Gleichlauf sowie die Genauigkeit der Ausrichtung werden erhöht, wenn wenigstens zwischen den Polstücken eine Füllung aus zusammenpreßbarem Material angeordnet ist, das die Polstücke in ihrem Durchmesser überragt.

Die Erfindung ist nachfolgend anhand eines in der Zeichnung dargestellten Ausführungsbeispieles näher erläutert. Es zeigen:

FIG 1 den Aufnahmeteil einer bekannten Röntgendiagnostikeinrich tung,

FIG 2 den Wiedergabeteil einer bekannten Röntgendiagnostikein richtung mit einer Auslesevorrichtung für einen Speicherleuchtschirm,

FIG 3 eine schematische Darstellung der erfindungsgemäßen Transportvorrichtung und

FIG 4 eine geschnittene Darstellung der erfindungsgemäßen Antriebswalze gemäß FIG 3.

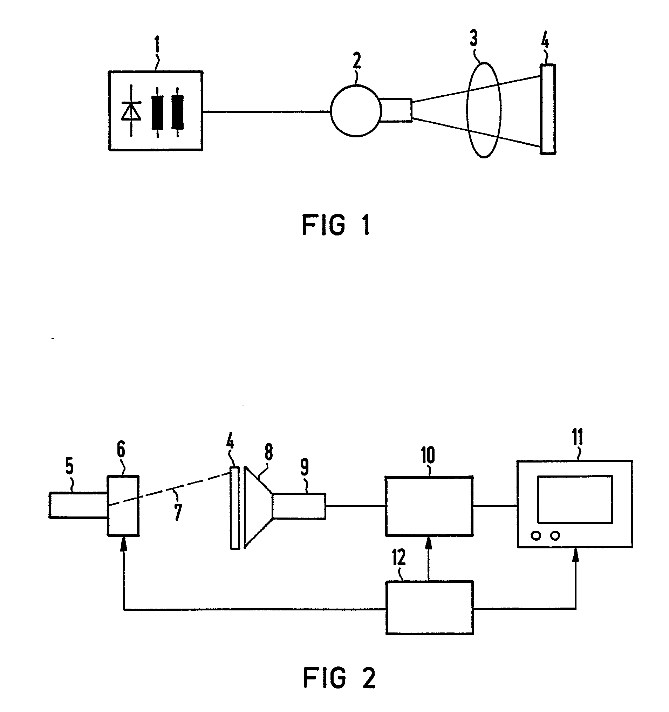

In der FIG 1 ist ein Hochspannungsgenerator 1 dargestellt, der eine Röntgenröhre 2 speist, die Röntgenstrahlen aussendet, die einen Patienten 3 durchdringen. Die durch den Patienten 3 entsprechend seiner Transparenz geschwächten Röntgenstrahlen fallen auf eine Lumineszenz-Speicherleuchtschirm 4. Dieses auffallende Strahlenbild erzeugt in dem Speicherleuchtschirm 4 Defektelektronen, die in Potentialfallen (Traps) gespeichert werden, so daß in dem Speicherleuchtschirm 4 ein latentes Bild gespeichert ist.

Zur Wiedergabe des latenten, gespeicherten Bildes wird üblicherweise, wie in FIG 2 dargestellt, der Speicherleuchtschirm 4 durch eine Strahlenquelle, beispielsweise einen Laser 5, bildpunktweise abgetastet, so daß die in den Traps gespeicherten Elektronen angeregt werden und in Rekombinationszentren zurückfallen können, wobei die Energiedifferenz in Form von Lichtquanten abgestrahlt wird. Dadurch ist es möglich, das derart gespeicherte Röntgenbild aus dem Speicherleuchtschirm 4 auszulesen.

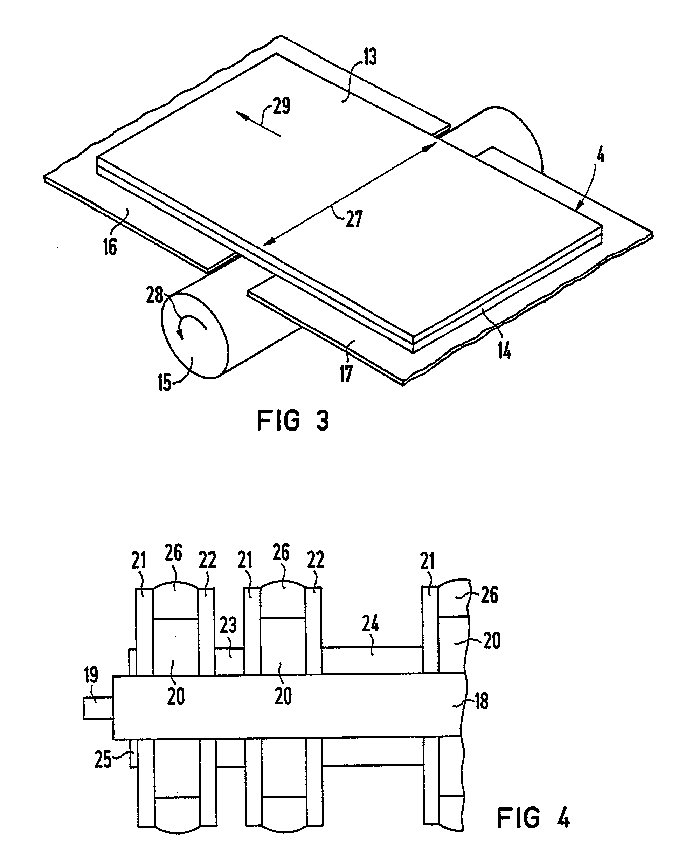

Zur flächenförmigen Abtastung ist dem Laser 5 eine Ablenkvorrichtung 6 vorgeschaltet, die den Abtaststrahl 7 zeilenweise über den Speicherleuchtschirm 4 ablenkt. Die Ablenkvorrichtung 6 für den Abtaststrahl 7 kann beispielsweise aus einem Ablenkspiegel für die vertikale Ablenkung bestehen. Für die Abtastung in horizontaler Richtung wird der Speicherleuchtschirm durch eine in FIG 3 näher dargestellte Transportvorrichtung zeilenweise weiterbefördert.

Das von dem Speicherleuchtschirm 4 emittierte Licht wird durch eine Detektorvorrichtung erfaßt, die aus einem Lichtleiter 8 besteht, der das Licht auf einen Detektor 9 leitet, der die Helligkeit der abgetasteten Bildpunkte erfaßt und in ein elektrisches Signal umwandelt.

Dieses elektrische Signal wird einer Wiedergabeschaltung 10 zugeführt, die aus den einzelnen analogen Ausgangssignalen des Detektors 9 ein Videosignal zur Darstellung auf einem Monitor 11 erzeugt. Eine Steuereinrichtung 12 bewirkt bei der Wiedergabe die Synchronisation der Ablenkvorrichtung 6, der Wiedergabeschaltung 10 und des Monitors 11. Die Wiedergabeschaltung 10 kann in bekannter Weise Bildspeicher, eine Verarbeitungsschaltung und Wandler aufweisen.

In FIG 3 ist die Transportvorrichtung für den Speicherleuchtschirm 4 dargestellt, der einen zweischichtigen Aufbau aufweist. Die nach oben gerichtete Leuchtstoffschicht 13 wird durch den in FIG 2 dargestellten Abtaststrahl 7 von oben zeilenförmig (Pfeile 27) abgetastet. Die Leuchtstoffschicht 13 ist auf einer Schicht 14 aus magnetischem Material, beispielsweise Stahlblech, aufgetragen. Durch eine Antriebswalze 15 aus magnetischem Material wird im Bereich der zeilenförmigen Abtastung durch den Abtaststrahl 7 der Speicherleuchtschirm 4 gehalten und auf die Antriebswalze 15 gepreßt. Nach erfolgter Abtastung einer Zeile kann die Antriebswalze 15 in Richtung eines Pfeiles 28 schrittweise weitergedreht werden, so daß sich der Speicherleuchtschirm 4 in Richtung eines Pfeiles 29 um den Abstand einer Abtastzeile weiterbewegt. Nun kann die nächste Zeile durch den Abtaststrahl 7 abgetastet werden. Führungen 16 und 17 halten den Speicherleuchtschirm 4 außerhalb des Abtastbereiches. Um einen konstanten Zeilenabstand zu erreichen, kann es zweckmäßig sein, die Antriebswalze 15 mit konstanter Winkelgeschwindigkeit anzutreiben.

In der FIG 4 ist die Antriebswalze 15 der Transportvorrichtung im Schnitt dargestellt. Sie weist eine Achse 18 aus nichtmagnetischem Material auf, die mit Lagerzapfen 19 versehen ist. Auf die Achse 18 sind Ringmagnete 20 gesteckt, deren Magnetfelder eine axiale Richtung aufweisen. Die Ringmagnete 20 werden seitlich durch ebenfalls auf die Achse 18 aufgesteckte Polstücke 21 und 22 begrenzt. Unterschiedlich lange Distanzstücke 23 und 24 halten die Magnetanordnungen 20 bis 22 auf den gewünschten, erforderlichen Abstand. Dieser Abstand kann beispielsweise dadurch gegeben sein, daß gefordert wird, daß für jede Größe des Speicherleuchtschirmes wenigstens die Seite und die Mitte des Speicherleuchtschirmes erfaßt und gehalten wird. Dadurch ergibt sich, daß eine Magnetanordnung 20 bis 22 sich in der Mitte der Antriebswalze 15 befindet, während am Rand der Antriebswalze 15 mehrere Magnetanordnungen 20 bis 22 vorgesehen sind, deren Abstand der zueinander gehörenden Paare den unterschiedlichen Abmessungen des Speicherleuchtschirmes 4 entsprechen.

Diese Magnetanordnungen und Distanzstücke werden durch bei seitige Klemmstücke 25 auf der Achse 18 festgehalten. Die Klemmstücke 25 können dabei Muttern sein, die durch auf der Achse 18 angebrachte Schraubgewinde festgehalten werden. Sie können aber auch fest mit der Achse 18 verbunden sein.

Zur Erhöhung der Haftung des Speicherleuchtschirmes 4 an der Antriebswalze 15 kann diese zumindest im Bereich zwischen den zu einem Ringmagnet 20 gehörenden Polstücken 21 und 22, durch die die magnetische Anziehungskraft ausgeübt wird, mit einer Füllung 26 aus zusammenpreßbarem Material versehen sein, die die Polstücke 21 und 22 in ihrem Außendurchmesser überragt. Diese Füllungen 26 können beispielsweise aus Schaumstoff bestehen. Durch die auf die Schicht 14 des Speicherleuchtschirmes 4 wirkende Anziehungskraft der Magnetanordnungen 20 bis 22 werden die Füllungen 26 zusammengepreßt, so daß diese den Speicherleuchtschirm 4 zusätzlich mitnehmen, da sich die Reibungskraft erhöht.

Die ringförmigen Polstücke 21 und 22 weisen einen größeren Durchmesser auf als die Ringmagnete 20. Dies vereinfacht die Herstellung der Magnetanordnungen 20 bis 22. Die Polstücke 21 und 22 können leicht mit dem erforderlichen Außendurchmesser und der erforderlichen glatten Fläche hergestellt werden, da für die Polstücke 21 und 22 ein leicht zu verarbeitendes Mate rial gewählt werden kann.

Anstelle der einen dargestellten Antriebswalze 15 lassen sich auch mehrere magnetische Antriebswalzen verwenden, die beispielsweise den Transport von einer Entnahmestation für den Speicherleuchtschirm aus einer Kassette zum Abtastbereich bewirken. Weiterhin erhöht die Verwendung von weiteren Antriebswalzen die Genauigkeit der Ausrichtung des Speicherleuchtschirmes 4. So kann beispielsweise etwa im halben Abstand der Abmessung des zu verwendenden kleinsten Speicherleuchtschirmes 4 vor und hinter der Antriebswalze 15 eine weitere Antriebswalze vorgesehen sein, so daß der Speicherleuchtschirm 4 immer wenigstens von zwei Antriebswalzen gehalten wird, so daß ein seitliches Verdrehen ausgeschlossen ist.

## Ansprüche

1. Auslesevorrichtung für einen Speicherleuchtschirm (4), in dem Röntgenstrahlenbilder latent gespeichert sind und der eine stimulierbare Leuchtstoffschicht (13) und eine Schicht (14) aus magnetischem Material aufweist, mit einer Abtastvorrichtung (5, 6), die eine zeilenförmige Abtastung mittels eines Abtaststrahles (7) einer Strahlenquelle (5) bewirkt, so daß der Speicherleuchtschirm (4) bildpunktweise zum Leuchten angeregt wird, mit einer Transportvorrichtung (15) mit magnetischen Haltemitteln für den Speicherleuchtschirm (4) und mit einer Detektorvorrichtung (8, 9) zum flächenförmigen Erfassen des von dem Speicherleuchtschirm (4) emittierten Lichtes, **dadurch gekennzeichnet,** daß die Transportvorrichtung (15) wenigstens im Bereich (27) des Abtaststrahles eine magnetische Antriebswalze (15) aufweist, die den Transport des Speicherleuchtschirmes (4) bewirkt.

2. Auslesevorrichtung nach Anspruch 1, **dadurch gekennzeichnet,** daß die Antriebswalze (15) eine Achse (18) aus nichtmagnetischem Material aufweist, auf die Ringmagnete (20) aufgesteckt sind, die beidseitig von ringförmigen Polstücken (21, 22) begrenzt werden, und daß sich zwischen den Polstücken (21, 22) Distanzstücke (23, 24) aus nichtmagnetischem Material befinden.

3. Auslesevorrichtung nach Anspruch 2, **dadurch gekennzeichnet,** daß die Polstücke (21, 22) einen größeren Durchmesser aufweisen als die Ringmagnete (20).

4. Auslesevorrichtung nach Anspruch 3, **dadurch gekennzeichnet,** daß wenigstens zwischen den Polstükken (21, 22) eine Füllung (26) aus zusammenpreßbarem Material angeordnet ist, das die Polstücke (21, 22) in ihrem Durchmesser überragt.

88 P 8568

FIG 1

FIG 2

88 P 8568

**FIG 3**

**FIG 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 098 574 (FUJI PHOTO FILM CO. LTD) <br> * Zusammenfassung; Seite 5, Zeilen 3-17; Seite 6, Zeilen 13-24; Seite 10, Zeile 22 - Seite 11, Zeile 12; Figuren * <br><br> --- | 1,2 | G 01 T 1/29 |
| D,A | EP-A-0 098 596 (FUJI PHOTO FILM CO. LTD) <br> * Zusammenfassung; Seite 6, Zeilen 9-25; Figuren * <br> ----- | 1 | |

**RECHERCHIERTE SACHGEBIETE (Int. Cl.4)**

G 01 T

Der vorliegende Recherchenbericht wurde für alle Patentansprüche erstellt

| Recherchenort | Abschlußdatum der Recherche | Prüfer |
|---|---|---|
| DEN HAAG | 28-09-1989 | DATTA S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPO FORM 1503 03.82 (P0403)